# EUROPEAN PATENT SPECIFICATION

(11) **EP 0 926 295 B1**
(45) Date of publication and mention of the grant of the patent: **22.01.2003**
(21) Application number: 98107839.7
(22) Date of filing: 29.04.1998
(51) Int. Cl.: D21D 5/16

(54) **Paper-making screen apparatus**
Siebvorrichtung für die Papierherstellung
Appareil de tamisage pour la fabrication du papier

(30) Priority: 25.12.1997 JP 35675697; 12.03.1998 JP 6170498
(43) Date of publication of application: 30.06.1999
(73) Proprietor: AIKAWA IRON WORKS CO., LTD., Shizuoka 420 (JP)
(72) Inventor: Aikawa, Yoshihiko, Shizuoka, 420 (JP)
(74) Representative: Schwabe - Sandmair - Marx

(56) References cited:
- EP-A- 0 764 737
- WO-A-90/12147
- WO-A-97/34045

## Description

### 1. Field of the Invention

The present invention relates to a paper-making screen apparatus. More particularly, the present invention relates to a paper-making screen apparatus having an improved screen, in which the interval between a first end plate and a second end plate is kept by interval keeping members, and further, ends of rod-shaped members are held by a first and second end plates.

### 2. Description of the Related Art

There is available a paper-making screen apparatus in which a screen is formed by annularly arranging a plurality of rod-shaped members between a first annular support member (first end plate) located on one end side and a second support member (second end plate) located on the other end side (for example, U.S. Patent 5,605,234 and U.S. Patent Application No. 08/741,718).

In U.S. Patent Application No. 08/741,718, an interval keeping member is provided between a first annular supporting member and a second annular supporting member to keep an interval between the supporting members, and further, ends of a plurality of rod-shaped members annularly provided are held by and between the first supporting member and the second supporting member. An end of the interval keeping member is secured by welding to the first supporting member, and the other end of the interval keeping member, to the second supporting member, respectively (see Fig. 6 of U.S. Patent Application No. 08/741,718).

In a screen disclosed in U.S. Patent 5,605,234, ends of rod-shaped members are individually secured by welding (see Figs. 6 and 9 of U.S. Patent Application No. 08/741,718; while screws are used in Fig. 9, ends of the rod-shaped members are secured by welding to the first supporting member and the second supporting member, respectively).

Particularly when securing by welding, welding is carried out while applying a force by a press to ensure a state of firm fixture. This leads to a low operability, making it difficult to manufacture the same, and in addition, welding strain causes a deformation, and hence deterioration of screen performance, not permitting achievement of uniform intervals between adjacent rod-shaped members. When replacing damaged rod-shaped members after assembly, furthermore, it is necessary to grind off welded portions with a grinder, this posing a problem of a very poor operability.

The present invention has an object to provide a paper-making screen apparatus for solving the problems as described above.

To achieve the foregoing object, the paper-making screen apparatus of the invention in accordance with appended claims 1 and 4 is provided. The subclaims define advantageous embodiments of the invention.

### BRIEF DESCRIPTION OF THE DRAWINGS

Fig. 1 is a schematic sectional view illustrating a paper-making screen apparatus of an embodiment of the invention;
Fig. 2 is a partially cutaway schematic sectional view illustrating the screen shown in Fig. 1;
Fig. 3 is a partially cutaway enlarged schematic sectional view illustrating a part of the screen shown in Fig. 2;
Fig. 4 is a schematic perspective view for illustrating the state of engagement of a rod-shaped member and an engaging section for rod-shaped member of a first end plate contact member shown in Fig. 2;
Fig. 5 is a schematic perspective view for illustrating the state of engagement of a rod-shaped member and an engaging section for rod-shaped member of a second end plate contact member shown in Fig. 2;
Fig. 6 is a schematic sectional view for illustrating the relationship among a screen interval keeping member, the second end plate contact member and a second end plate shown in Fig. 2;
Fig. 7 is a partially cutaway schematic bottom view of Fig. 2;
Fig. 8 is a schematic sectional view of Fig. 2 cut along the line Y-Y;
Fig. 9 is a schematic exploded perspective view for illustrating an assembly step of the screen shown in Fig. 2;
Fig. 10 is a partially enlarged schematic sectional view illustrating another embodiment of the invention different from that shown in Fig. 3;
Fig. 11 is a schematic sectional view illustrating another screen different from that shown in Fig. 2;
Fig. 12 is a schematic sectional view illustrating a further screen different from that shown in Fig. 11;
Fig. 13 is a schematic sectional view illustrating a screen when an engaging section for rod-shaped members is provided inside an opening for interval keeping member;
Fig. 14 is a schematic sectional view illustrating further another screen different from that shown in Fig. 12; and
Fig. 15 is a partially enlarged schematic sectional view illustrating a part of Fig. 14.

### DESCRIPTION OF THE PREFERRED EMBODIMENTS

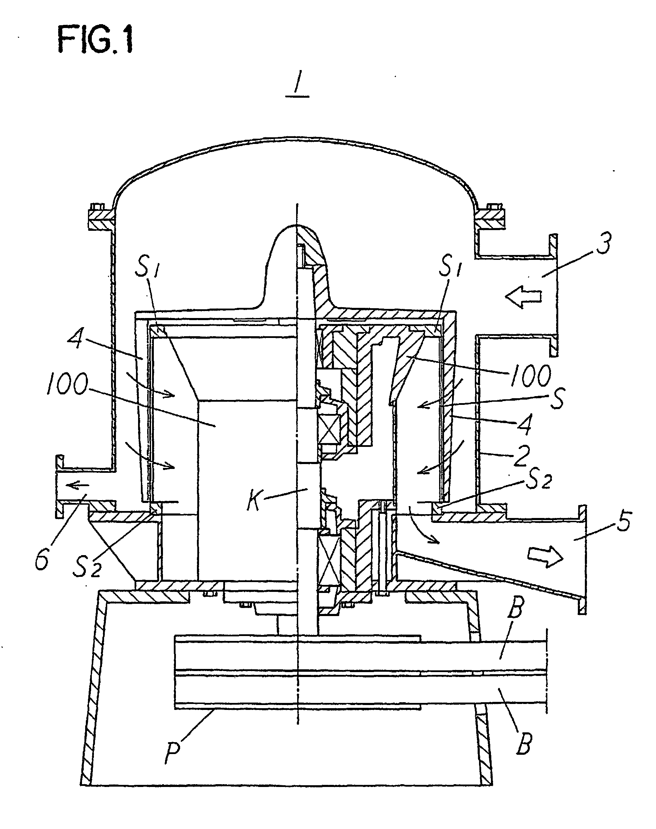

Now, a paper-making screen apparatus of an embodiment of the invention will be described below with reference to the drawings. In Figs. 1 to 9, 1 is a paper-making screen apparatus. The paper-making screen apparatus 1 is to separate foreign matters from paper-making raw materials via a screen S.

As shown in Fig. 1, paper-making raw materials enter into the apparatus through a paper-making raw materials entry 3 provided in a casing 2, and stirred by a stirring member 4. Foreign matters contained in the paper-making raw materials cannot pass through the screen S; acceptable raw materials pass through meshes of the screen S and are discharged to outside the casing 2 through a paper-making raw materials exit 5 provided in the casing 2. Foreign matters that cannot pass through the meshes of the screen S are discharged to outside the casing 2 from a foreign matter exit 6 provided in the casing 2. The stirring member 4 is rotated by a driving force from a motor not shown transmitted through a belt B, a pulley P and a rotating shaft K.

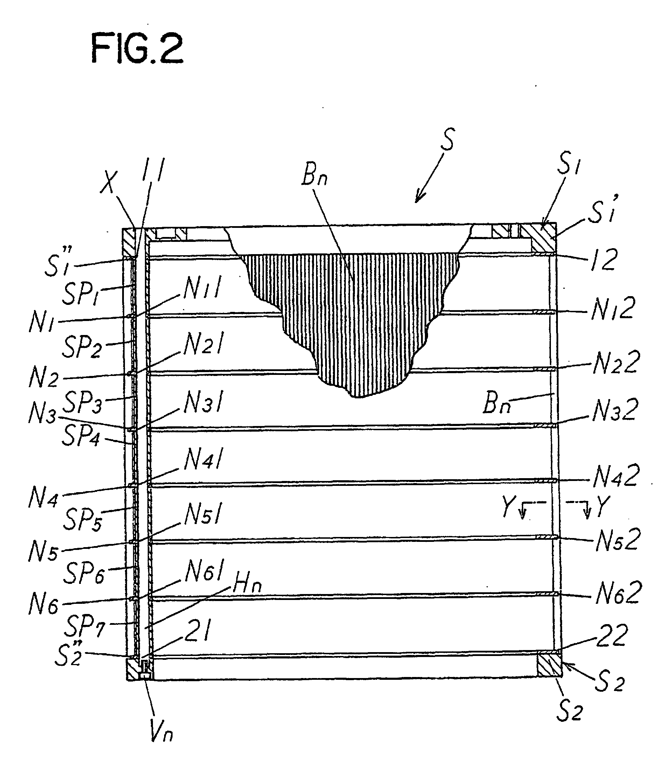

The screen S has a first annular end plate S₁ located on one end side thereof, and a second annular end plate S₂ located on the other side thereof so that the first end plate S₁ and the second end plate S₂ face each other as shown in Fig. 2.

A plurality of openings Kₙ for male screws are annularly provided in the second end plate S₂ (the present embodiment has eight openings Kₙ for male screws). The first annular end plate S₁ and the second annular end plate S₂ are more specifically, for example, rings.

Hₙ shown in Figs. 2, 3, 6 and 9 are interval keeping members. The interval keeping members Hₙ (this embodiment has eight interval keeping members) are secured between the first end plate S₁ and the second end plate S₂ so as to keep an interval between the first end plate S₁ and the second end plate S₁₂. Female screws Mₙ (this embodiment has eight female screws Mₙ) are provided on the side of the interval keeping members Hₙ facing the second end plate S₂. Vₙ are male screws engaging with the female screws Mₙ, and there are a plurality of male screws Vₙ, eight in this embodiment.

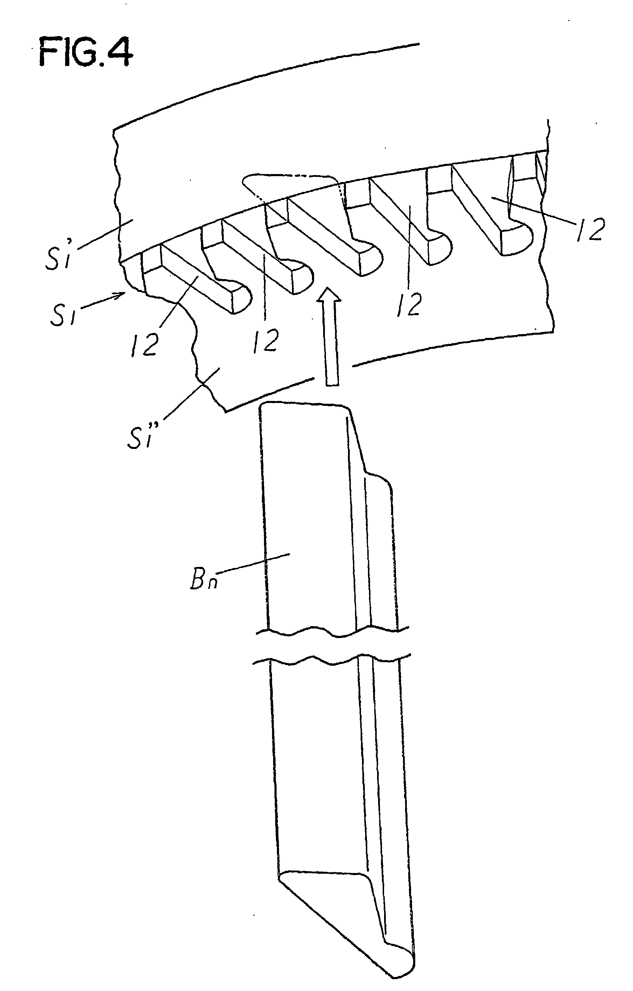

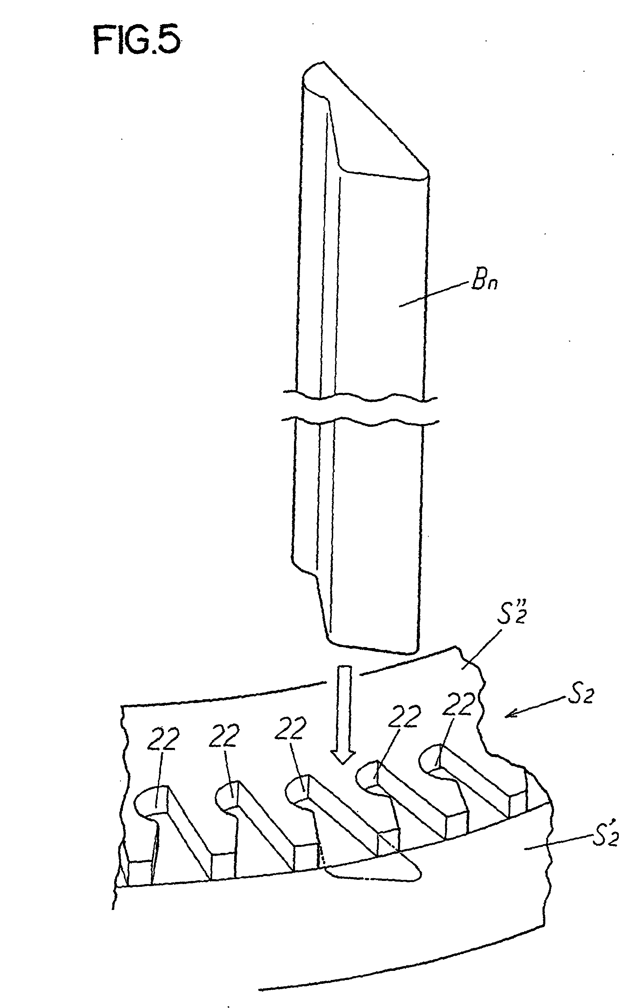

Bₙ shown in Figs. 4 and 5 are rod-shaped members. An end of a rod-shaped member Bₙ comes into contact with the first end plate S₁, and the other end thereof, with the second end plate S₂, respectively. A plurality of rod-shaped members Bₙ (in this embodiment, for example, about 500) annularly provided at intervals. An interval is formed between two adjacent rod-shaped members Bₙ. The rod-shaped members Bₙ are located outside the interval keeping members Hₙ. The rod-shaped members Bₙ are formed, for example, by drawing, and have substantially a uniform sectional shape.

The ends of the plurality of rod-shaped members Bₙ are held between the first end plate S₁ and the second end plate S₂ held by the plurality of interval keeping members Hₙ, and an interval T of the screen S is formed by adjacent rod-shaped members Bₙ. In other words, the rod-shaped members Bₙ are adjacent to each other and annularly arranged so as to keep an interval T.

The first end plate S₁ and the interval keeping members Hₙ are secured by welding as shown by welded portions X in Figs. 2, 3 and 6. The second end plate S₂ and the interval keeping members Hₙ are secured in all cases by engaging male screws Vₙ with female screws Mₙ, via openings Kₙ for male screws provided in the second end plate S₂, thus tightening the second end plate S₂ against the plurality of interval keeping members Hₙ.

As a result, according to the screen S of the paper-making screen apparatus 1 of this embodiment, the conventional necessity to weld the first end plate and the interval keeping members is eliminated in a state in which the first end plate and the second end plate holding the ends of the plurality of rod-shaped members in between are pressed by a press or the like. It suffices to engage the male screws Vₙ with the female screws Mₙ, via the openings Kₙ for male screws provided in the second end plate S₂, thus tightening the second end plate S₂ against the plurality of interval keeping members Hₙ. Because at least one side of the interval keeping members Hₙ facing the second end plate S₂ is secured not by welding, the secured assembly is free from the effect of welding strain, and the interval between adjacent rod-shaped members Bₙ can be kept more uniform than in the conventional art. In addition, assembly is very easy, and further, when replacing a damaged rod-shaped member after assembly, it suffices to release screw engagement of the male screws Vₙ and the female screws Mₙ by loosening the male screws Vₙ, since they are not secured by welding as in the conventional case, with very easy removal.

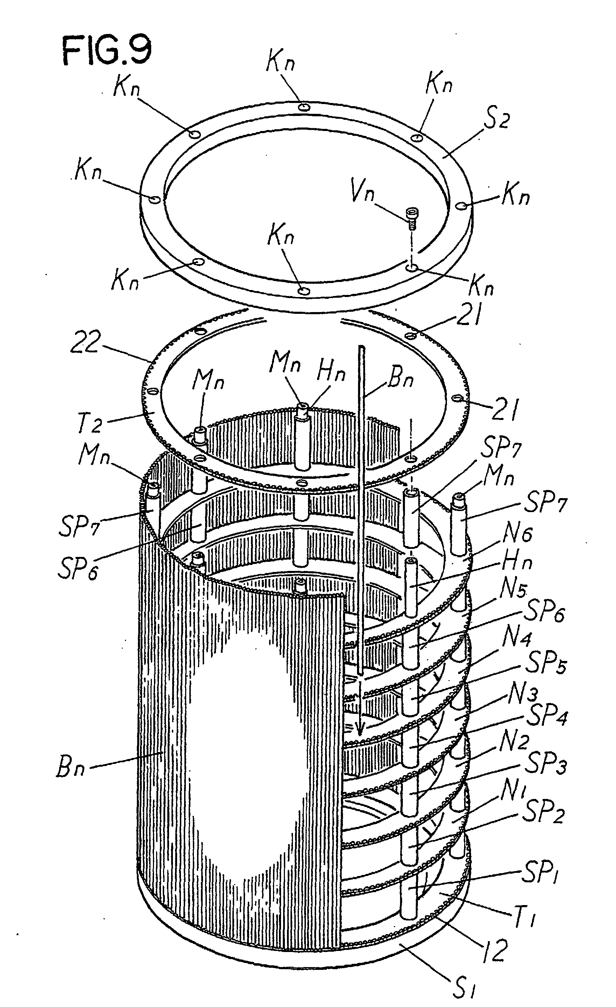

When preparing a screen S, as shown in Fig. 9, assembly is conducted with the first end plate S₁ at the bottom and the second end plate S₂ at the top, and the male screws Vₙ are engaged with the female screws Mₙ, via the openings Kₙ for male screws provided in the second end plate S₂, thereby tightening the second end plate Sₙ against the plurality of interval keeping members Hₙ. In order to incorporate the screen S into the paper-making screen apparatus 1, as shown in Fig. 1, with the first end plate S₁ at the top and the second end plate S₂ at the bottom, the screen S is held by a screen supporting member 100 to block up the opening of the first end plate S₁.

The second end plate S₂ on the male screw Vₙ side is located at the bottom with a view to avoiding, when detaching the screen S to differentiate it from the male screws (not shown) securing the screen S to a screen supporting member 100, operator's erroneous loosening of the male screws Vₙ located on the second end plate S₂ side, which results in dismantling of the screen S.

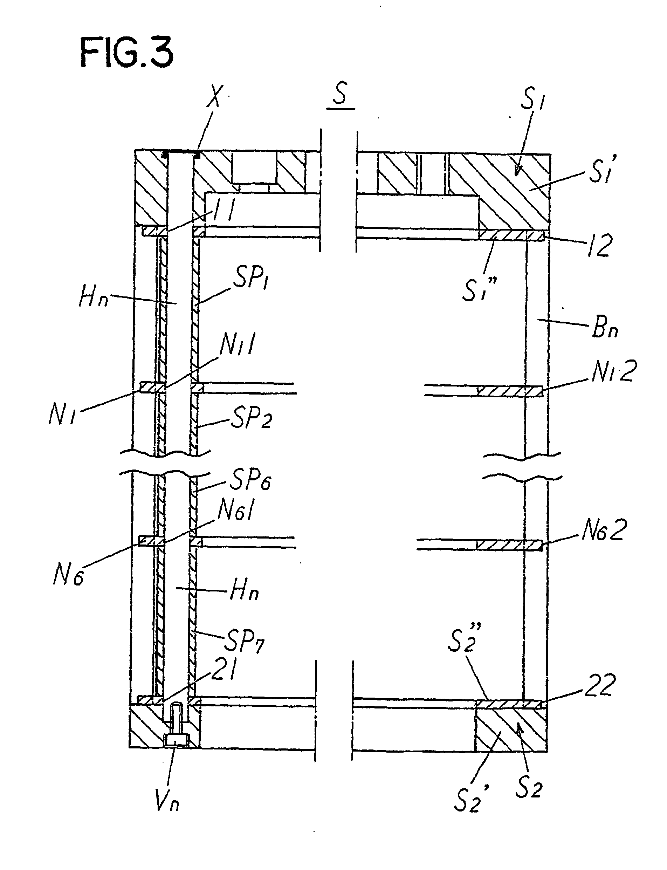

While the first end plate S₁ may be formed integrally, it may also be formed into a configuration, as shown in Fig. 4, for example, in which the first end plate S₁ comprises a first end plate ring S₁' and a ring-shaped first end plate contact member S₁": the first end plate contact member S₁" is located closer to the second end plate S₂ than the first end plate ring S₁' and comes into contact with the first end plate S₁', and the first end plate contact member S₁" has a plurality of openings 11 for interval keeping members (see Figs. 2 and 3) and a plurality of annularly provided engaging sections 12 for rod-shaped members.

In a state in which the first end plate S₁ is attached to the paper-making screen apparatus 1, the opening of the first end plate S₁ is blocked up by the ceiling board of the screen supporting member 100. The first end plate contact member S₁" is ring-shaped, or more specifically, is of a shape of a ring largely opening including the center of the first end plate contact member S₁". The engaging sections 12 for the rod-shaped members, although Fig. s illustrates only a part of the outer periphery of the first end plate contact member S₁", are annularly provided at prescribed intervals throughout the entire outer periphery of the first end plate contact member S₁" (see Figs. 3, 4, 6 and 9).

While the second end plate S₂ may be formed integrally, it may also be formed into a configuration, as shown in Fig. 5 for example, in which the second end plate S₂ comprises a second end plate ring S₂' and a ring-shaped second end plate contact member S₂": the second end plate contact member S₂" is located closer to the first end plate S₁ than the second end plate ring S₂' and comes into contact with the second end plate ring S₂', and the second end plate contact member S₂" has a plurality of openings 21 for interval keeping members and a plurality of annularly provided engaging sections 22 for rod-shaped members. The second end plate contact member S₂" is ring-shaped, or more specifically, is of a shape of a ring largely opening including the center of the second end plate contact member S₂". Although Fig. 5 illustrates only a part of the outer periphery of the second end plate contact member S₂", the engaging sections 22 (see Figs. 2 and 3) for rod-shaped members are annularly provided at prescribed intervals throughout the entire outer periphery of the second end plate contact member S₂" (see Figs. 3, 5, 6 and 9).

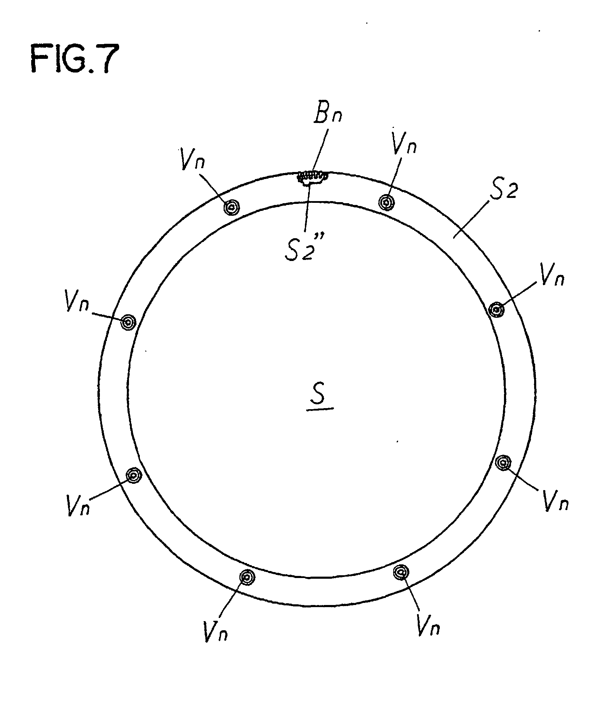

At least two annular intermediate support members Nₙ [while this embodiment has six intermediate support members N₁, N₂, N₃, N₄, N₅ and N₆ as shown in Fig. 2, n(n ≥ 2) annular intermediate support members Nₙ will do] are provided between the first end plate contact member S₁" and the second end plate contact member S₂". The annular intermediate support members Nₙ have a plurality of openings Nₙ7 for interval keeping members and a plurality of engaging sections Nₙ2 for annularly provided rod-shaped members. The aforesaid annular intermediate support member Nₙ is ring-shaped, or more specifically, is of the shape of a ring largely opening including the center of the intermediate support member Nₙ. Although Fig. 7 illustrates only a part of the outer periphery of the intermediate support member Nₙ, the engaging sections Nₙ2 for rod-shaped members are annularly provided at prescribed intervals throughout the entire outer periphery of the engaging sections Nₙ2 for rod-shaped members.

In this embodiment, as shown in Fig. 2, the six intermediate support members N₁, N₂, N₃, N₄, N₅ and N₆ are sequentially arranged from the first end plate contact member S₁" toward the second end plate contact member S₂". The intermediate support member N₁ has a plurality of openings N₁1 for interval keeping members and a plurality of annularly provided engaging sections N₁2 for rod-shaped members. The intermediate support member N₂ has a plurality of openings N₂1 for interval keeping members and a plurality of annularly provided engaging sections N₂2 for rod-shaped members. The intermediate support member N₃ has a plurality of openings N₃1 for interval keeping members and a plurality of annularly provided engaging sections N₃2 for rod-shaped members. The intermediate support member N₄ has a plurality of openings N₄1 for interval keeping members and a plurality of annularly provided engaging sections N₄2 for rod-shaped members. The intermediate support member N₅ has a plurality of openings N₅1 for interval keeping members and a plurality of annularly provided engaging sections N₅2 for rod-shaped members. The intermediate support member N₆ has a plurality of openings N₆1 for interval keeping members and a plurality of annularly provided engaging sections N₆2 for rod-shaped members.

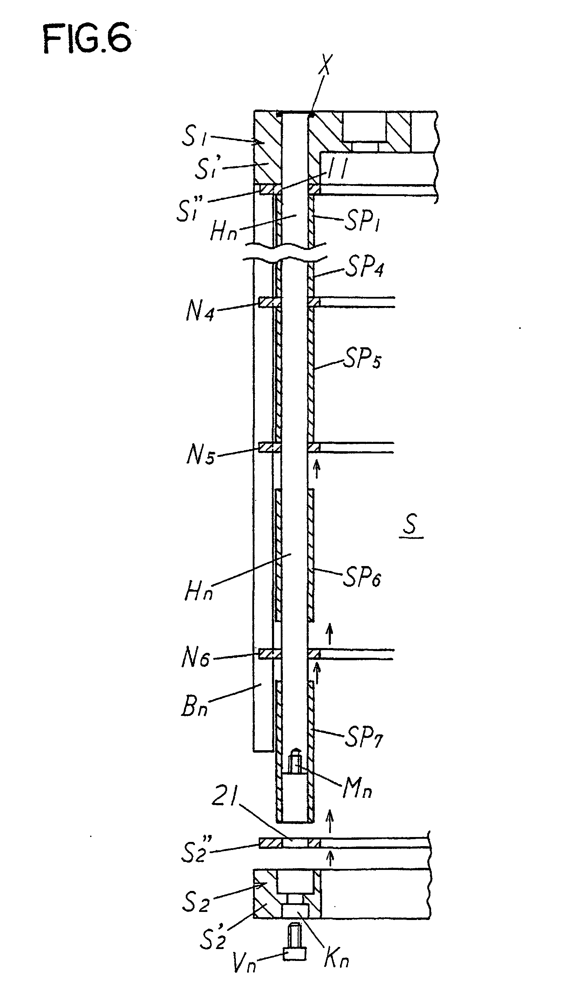

The plurality of interval keeping member Hₙ (in this embodiment, there are eight interval keeping members Hₙ) are provided via the openings 11 for interval keeping members of the first end plate contact member S₁", openings for interval keeping members N₁1, N₂1, N₃1, N₄1, N₅1 and N₆1 of the intermediate support members N₁, N₂, N₃, N₄, N₅ and N₆, and the openings 21 for interval keeping members of the second end plate contact member S₂". The interval keeping members Hₙ and the first end plate S₁ are secured, for example, by welding (the welded portions is shown by X in Fig. 6), and the interval keeping members Hₙ and the second end plate S₂ are secured, as described above, by engaging and tightening the male screws Vₙ with the female screws Mₙ via the openings Kₙ for male screws provided in the second end plate S₂ on the secured end plate S₂ side, thus keeping the interval between the first end plate S₁ and the second end plate S₂.

The male screws Vₙ are tightened with the female screws Mₙ so as to prevent the rod-shaped members Bₙ from producing a play. A play of the rod-shaped members Bₙ lead to a decrease in performance of the screen resulting from a non-uniform interval from the adjacent rod-shaped member Bₙ, or from producing a play of the rod-shaped members Bₙ during rotation of the screen S₁ resulting in dismantling and breakage of the screen S. Care should be taken not to cause buckling of the rod-shaped members Bₙ as a result of very strong tightening of the male screws Vₙ. To prevent loosening of the male screws Vₙ after tightening, for example, the male screw Vₙ tops and the second end plate S₂ may be spot-welded to secure the male screw Vₙ, or an adhesive may be coated onto the tightening portions of the male screws Vₙ and the female screws Mₙ to secure the male screws Vₙ to the female screws Mₙ.

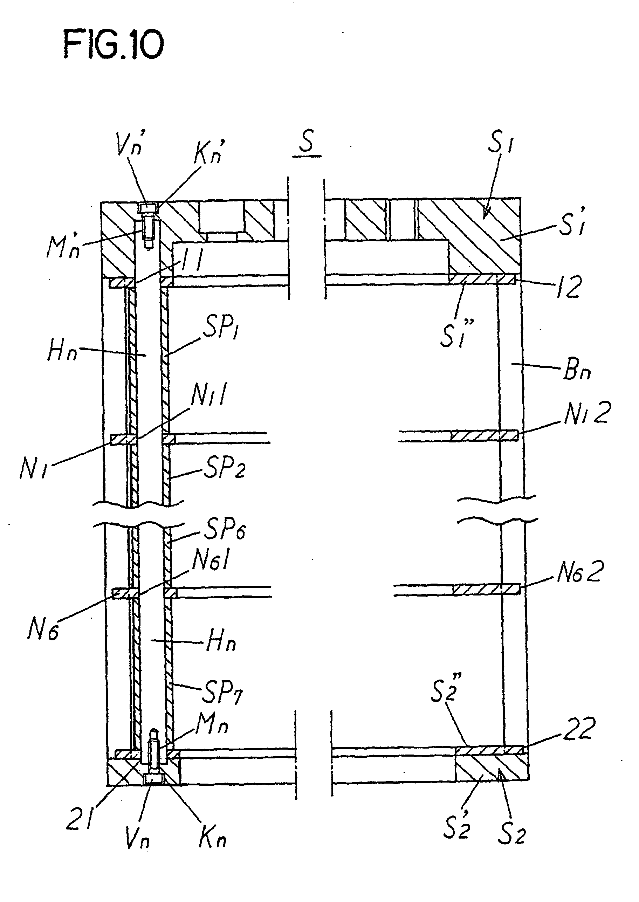

While the interval keeping members Hₙ and the second end plate S₂ are secured by welding as shown in Fig. 6, the interval keeping members Hₙ and the first end plate S₁, may as required be accomplished by tightening the first end plate S₁ against the plurality of interval keeping members Hₙ through engagement of the male screws Vₙ' with the female screws Mₙ' provided in the interval keeping members Hₙ on the side facing the first end plate S₁ via the openings Kₙ provided in the first end plate S₁, as shown in Fig. 10, in all cases.

With a view to reinforcing the rod-shaped members Bₙ, at least two annular intermediate support members Nₙ should be provided between the first end plate contact member S₁" and the second end plate contact member S₂". In this case, it is necessary to provide at least on span holding member group SPₙ₋₁ (in this embodiment having eight interval keeping members Hₙ, the span holding member group SPₙ₋₁ would contain eight members. Each component of the span holding member group SPₙ₋₁ is more specifically a cylindrical member known as a collar) located on the outer periphery of each of the plurality of interval keeping members Hₙ (in this embodiment, there are eight interval keeping members). The span holding member group SPₙ₋₁ is provided between the opposed intermediate support members Nₙ, in contact therewith, thereby keeping an interval between the opposed intermediate support members Nₙ.

It is necessary to provide at least one span holding member group SPₙ₋₁ because if there are two intermediate support members Nₙ, n=2 leads to one span holding member group SP₁. In the present embodiment with n=6, intermediate support members N₁, N₂, N₃, N₄, N₅ and N₆ are sequentially arranged, as shown in Fig. 2, from the first end plate contact member S₁" toward the second end plate contact member S₂". Six span holding member groups are therefore arranged: a span holding member group SP₂ between the intermediate support member N₁ and the intermediate support member N₂, a span holding member group SP₃ between the intermediate support member N₂ and the intermediate support member N₃, a span holding member group SP₄ between the intermediate support member N₃ and the intermediate support member N₄, a span holding member group SP₅ between the intermediate support member N₄ and the intermediate support member N₅, and a span holding member group SP₆ between the intermediate support member N₅ and the intermediate support member N₆.

The first span holding member group SP₁ is provided between the first end plate contact member S₁" and the intermediate support member N₁ on the side closer to the first end plate contact member S₁". The first span holding member group SP₁ keeps an interval between the opposed first end plate contact member S₁" and intermediate support member N₁ on the side closer to the first end plate contact member S₁" by coming into contact with the opposed first end plate contact member S₁" and intermediate support member N₁ on the side closer to the first end plate contact member S₁". The first span holding member group SP₁ is located on the outer periphery of each of the interval keeping members Hₙ (the present embodiment has eight interval keeping members Hₙ). A member composing the first span holding member group SP₁ is more specifically a cylinder used for keeping a certain distance between two members, and is a member known as a collar.

The second span holding member group SP₇ is provided between the second end plate contact member S₂" and the intermediate support member N₆ on the side closer to the second end plate contact member S₂". The second span holding member group SP₇ keeps an interval between the opposed second end plate contact member S₂" and intermediate support member N₆ on the side closer to the second end plate contact member S₂" by coming into contact with the opposed second end plate contact member S₂" and intermediate support member N₆ on the side closer to the second end plate contact member S₂". The second span holding member group SP₇ is located on the outer periphery of each of the interval keeping members Hₙ (the present embodiment has eight interval keeping members Hₙ). A member composing the second span holding member group SP₇ is more specifically a cylinder used for keeping a certain distance between two members, and is a member known as a collar.

One side ends of the plurality of rod-shaped members Bₙ (there are provided, for example, 500 rod-shaped members) having substantially a uniform cross-section (the term "cross-section" as used here means a surface obtained by cutting in a direction traversing the longitudinal direction of the rod-shaped member Bₙ) are in contact with the first end plate S₁ as shown in Fig. 4 (more specifically, a plurality of engaging sections 12 for rod-shaped members provided on the first end plate contact member S₁"), and the other side ends, to the second end plate S₂ (more specifically, a plurality of engaging sections 22 for rod-shaped members provided on the second end plate contact member S₂"). The middle portions of the rod-shaped members Bₙ are engaged, respectively, with a plurality of engaging sections N₁2 for rod-shaped members provided on the intermediate support member N₁, a plurality of engaging sections N₂2 for rod-shaped members provided on the intermediate support member N₂, a plurality of engaging sections N₃2 for rod-shaped members provided on the intermediate support member N₃, a plurality of engaging sections N₄2 for rod-shaped members provided on the intermediate support member N₄, a plurality of engaging sections N₅2 for rod-shaped members provided on the intermediate support member N₅, and a plurality of engaging sections N₆2 for rod-shaped members provided on the intermediate support member N₆. The rod-shaped members Bₙ and the intermediate support members Hₙ are arranged in parallel with each other.

The plurality of openings 11 for interval keeping members and the plurality of engaging sections 12 for rod-shaped members provided in the first end plate contact member S₁", the plurality of openings for interval keeping members N₁1, N₂1, N₃1, N₄1, N₅1 and N₆1 and the plurality of engaging sections for rod-shaped members N₁2, N₂2, N₃2, N₄2, N₅2 and N₆2 provided in the intermediate support members N₁, N₂, N₃, N₄, N₅ and N₆, and the plurality of openings 21 for interval keeping members and the plurality of engaging sections 22 for rod-shaped members provided in the second end plate contact member S₂" are formed by cutting by means, for example, of a press, a laser beam or a wire cutter.

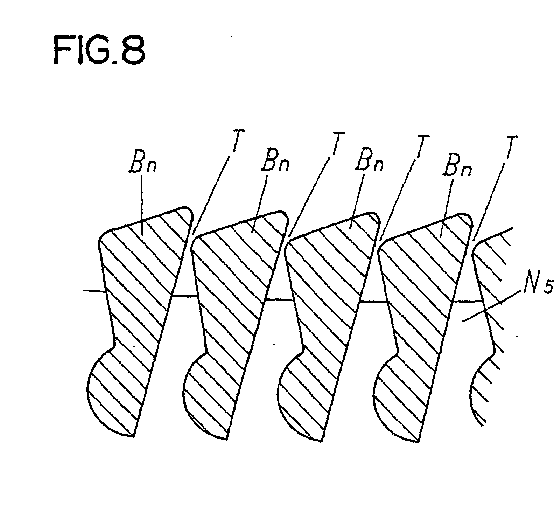

The engaging sections 12 for rod-shaped members, the engaging sections for rod-shaped members N₁2, N₂2, N₃2, N₄2, N₅2 and N₆2, and the engaging sections 22 for rod-shaped members all agree with a part of the sectional shape of the rod-shaped member Bₙ. In a state in which these sections engage with the rod-shaped members Bₙ, the rod-shaped members Bₙ are free from regulation in the longitudinal direction of the rod-shaped members Bₙ, and movement is regulated in a direction at right angles to the longitudinal direction of the rod-shaped members Bₙ. Further, in a state in which the rod-shaped members Bₙ are arranged in parallel, an interval T is kept between two adjacent rod-shaped members Bₙ as shown in Fig. 8.

Particularly because of the common nature between the engaging sections for rod-shaped members 12, N₁2, N₂2, N₃2, N₄2, N₅2, N₆2 and 22 engaging with the rod-shaped members Bₙ having substantially a uniform cross-sectional shape, on the one hand, and the opening 11 for interval keeping members, the openings for interval keeping members N₁1, N₂1, N₃1, N₄1, N₅1 and N₆1, and the opening 2 for interval keeping members, at which the interval keeping members Hₙ are located, on the other hand, use of common identical parts for the first end plate contact member SA₁", the second end plate contact member S₂", and the intermediate support members N₁, N₂, N₃, N₄, N₅ and N₆ permits production of these products through the same fabrication, leading to a higher efficiency, and provides remarkable advantages in repair and other maintenance and administering efforts brought about by the possibility of using the same parts.

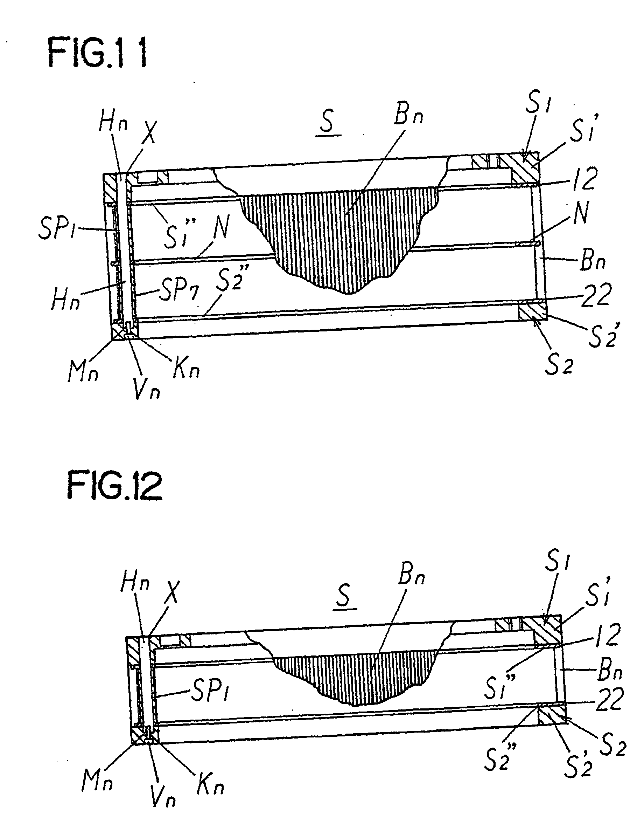

While at least two intermediate support members Nₙ have been required in the foregoing embodiment (Figs. 1 to 10), only one intermediate support member Nₙ may suffice in some cases, as shown in Fig. 11.

This case differs from the foregoing embodiment (Figs. 1 to 10) in that the intermediate support member N is held between the first span holding member group SP₁ and the second span holding member group SP₇, resulting in the absence of opposed intermediate support members, and hence in the absence of a span holding member group for keeping an interval between opposed intermediate support members by coming into contact therewith.

In the screen S shown in Fig. 11, one side ends of the plurality of rod-shaped members Bₙ are in contact with the first end plate S₁ and the other side ends, with the second end plate S₂, respectively. These rod-shaped members Bₙ are annularly arranged at intervals. Two adjacent rod-shaped members Bₙ form an interval of the screen S, and ends of the plurality of rod-shaped members Bₙ are held between the first end plate S₁ and the second end plate S₂.

The interval keeping members Hₙ pass through the openings N₁1 for interval keeping members of the intermediate support member N, and secured to the first end plate S₁ and the second end plate S₂. The first span holding member group SP₁ is located on the outer periphery of each of the plurality of interval keeping members Hₙ, provided between the first end plate S₁ and the intermediate support member N, comes into contact with the opposed first end plate S₁ and intermediate support member N, and thus keeps an interval between the opposed first end plate S₁ and intermediate support member N.

The second span holding member group SP₇ is located on the outer periphery of each of the plurality of interval keeping members Hₙ, is provided between the second end plate S₂ and the intermediate support member N, is in contact with the opposed second end plate S₂ and intermediate support member N to keep an interval between the opposed second end plate S₂ and intermediate support member N.

The second end plate S₂ and the interval keeping members Hₙ are secured to each other by tightening the second end plate S₂ against the plurality of interval keeping members Hₙ through engagement of the male screws Vₙ with the female screws Mₙ via the openings for male screws provided in the second end plate S₂ in all cases. The other ends of the interval keeping members Hₙ are secured by welding to the first end plate S₁ (welded portions are represented by X).

In the aforesaid embodiment (Fig. 11), there has been only one intermediate support member Nₙ. In some cases, however, no intermediate support member Nₙ is required, as shown in Fig. 12.

The case without an intermediate support member Nₙ differs from the foregoing embodiment (Figs. 1 to 11) in that, because of the absence of an intermediate support member, the span holding member group SP₁ for keeping an interval between the first end plate S₁ and the second end plate S₂ is in contact with the opposed first end plate S₁ and second end plate S₂.

Ends of the plurality of interval keeping members Hₙ are secured to the first end plate S₁ and the second end plate S₂, respectively. In order to keep an interval between the first end plate S₁ and the second end plate S₂, therefore, it is not always necessary to provide a span holding member group SP₁.

In the screen shown in Fig. 12, one side ends of the plurality of rod-shaped members Bₙ are in contact with the first end plate S₁, and the other ends, to the second end plate S₂, and the rod-shaped members Bₙ are annularly arranged at intervals. Adjacent rod-shaped members Bₙ form meshes of the screen S, and the ends of the plurality of rod-shaped members are held between the first end plate S₁ and the second end plate S₂. The second end plate S₂ and the interval keeping members Hₙ are secured to each other by tightening the second end plate S₂ against the plurality of interval keeping members Hₙ through engagement of the male screws Vₙ with the female screws Mₙ via the openings Kₙ for male screws provided in the second end plate S₂ in all cases, as in the foregoing embodiment.

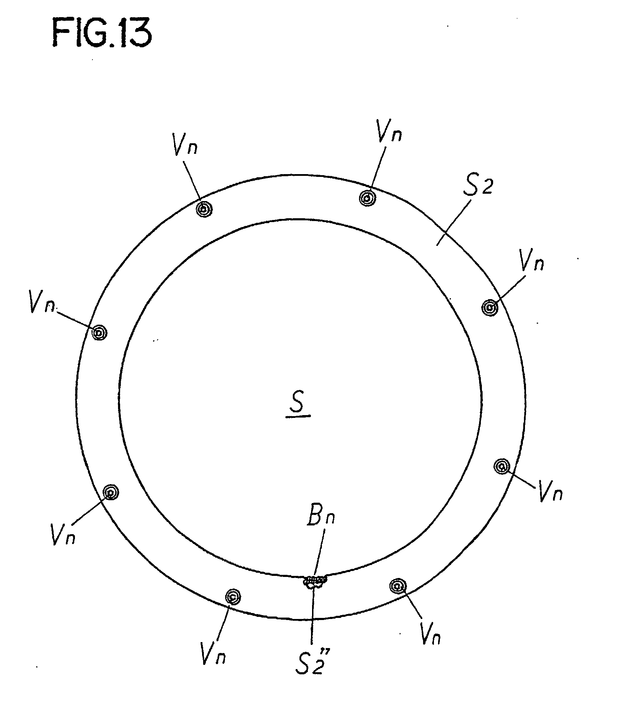

In the foregoing embodiment, as shown in Fig. 2, engaging sections Nₙ2 for rod-shaped members are provided on the outer periphery of the screen S, and the paper-making raw materials are caused to flow from outside to inside the screen for concentration by bringing the rod-shaped members closer to the stirring member 4. The screen is therefore of the outside pressure type (centripetal screen). In the invention, however, the screen is not limited to the above, but as shown in Fig. 13, for example, the engaging section N₄2 for rod-shaped members may be provided inside the opening for interval keeping member N₄1 (on the inner periphery of the screen S) and the rod-shaped member Bₙ may be brought closer to the stirring member (not shown), thus adopting a screen known as an inside pressure type one (centrifugal screen) in which the paper-making raw materials are caused to flow from inside to outside the screen S.

In the foregoing embodiment (Figs. 1 to 10), the rod-shaped members Bₙ are engaged with the plurality of engaging sections 12 provided on the first end plate contact member S₁", the plurality of engaging sections for rod-shaped members N₁2, N₂2, N₃2, N₄2, N₅2 and N₆2 provided on the intermediate support members N₁, N₂, N₃, N₄, N₅ and N₆, and the plurality of engaging sections 22 for rod-shaped members provided on the second end plate contact member S₂". When more intermediate support members Nₙ are provided, therefore, it becomes difficult to position the plurality of engaging sections for rod-shaped members 12, N₁2, N₂2, N₃2, N₄2, N₅2, N₆2 and 22. When conducting engagement, furthermore, the rod-shaped members Bₙ may be damaged, or when the rod-shaped members Bₙ are long in size, or are formed by drawing, the cross-sectional shape cannot be formed uniformly, or the interval between two adjacent rod-shaped members cannot be kept uniform.

To solve these inconveniences, the rod-shaped members Bₙ are divided into first rod-shaped members Bₙ' and second rod-shaped members Bₙ", and an intermediate support member for connection N' is provided between the first end plate S₁ and the second end plate S₂.

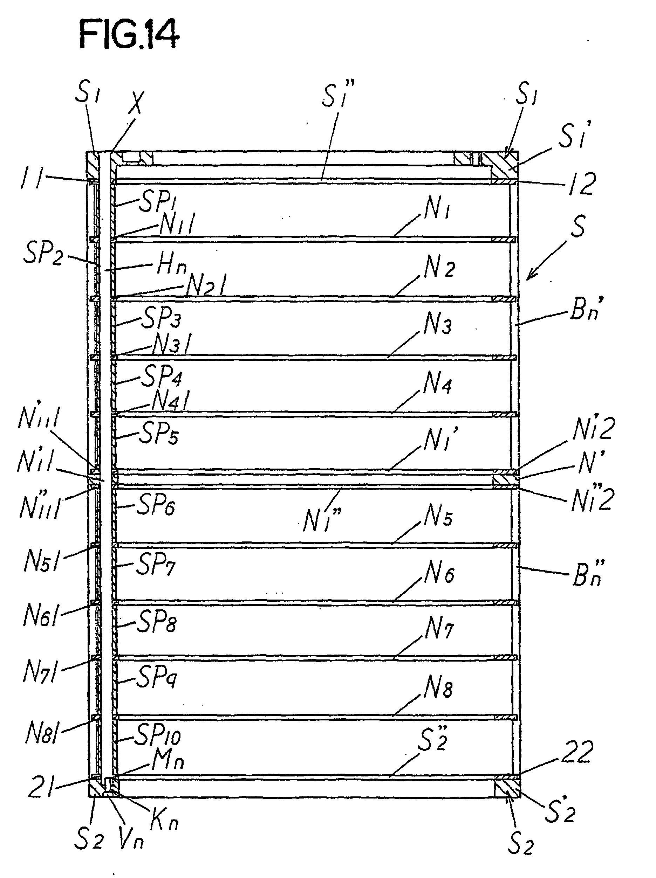

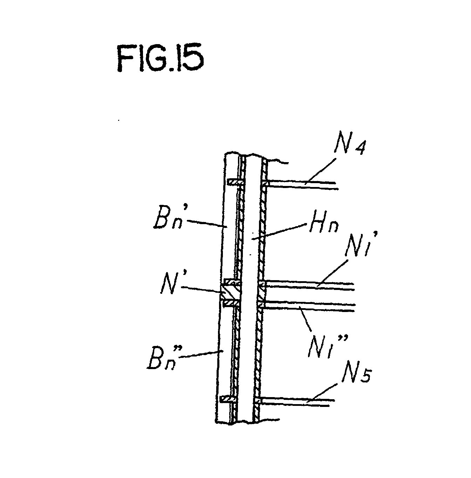

In Figs. 14 and 15, more particularly, the screen S is used when separating foreign matters from paper-making raw materials, as the paper-making screen apparatus shown in Fig. 1. The screen S has an intermediate support member for connection N'₁1 for interval keeping members between a first annular end plate S₁ located at an end of the screen S and a second annular end plate S₂ located at the other end. A plurality of interval keeping members Hₙ (in this embodiment, there are provided eight interval keeping members Hₙ) pass through the opening N'₁1 for interval keeping members, are secured to the first end plate S₁ and the second end plate S₂ to keep an interval between the first end plate S₁ and the second end plate S₂. A plurality of first rod-shaped members Bₙ' having substantially a uniform cross-sectional shape are annularly arranged at intervals between the first end plate S₁ and the intermediate support member N' for connection. A plurality of second rod-shaped members Bₙ" having substantially a uniform cross-sectional shape are annularly arranged at intervals between the second end plate S₂ and the intermediate support member N' for connection.

As a result, a mesh is formed by adjacent first rod-shaped members Bₙ' and adjacent second rod-shaped members Bₙ". The ends of the plurality of rod-shaped members Bₙ' are held between the first end plate S₁ and the intermediate support member N' for connection. The ends of the second rod-shaped members Bₙ" are held between the second end plate S₂ and the intermediate support member N' for connection.

On the side of the interval keeping member Hₙ facing the second end plate S₂, as in the foregoing embodiment, the second end plate S₂ and the interval keeping members Hₙ are secured to each other by tightening the second end plate S₂ against the plurality of interval keeping members Hₙ through engagement of the male screws Vₙ with the female screws Mₙ via the openings Kₙ for male screws provided in the second end plate S₂ in all cases. The interval keeping members Hₙ and the first end plate are secured to each other by welding (welded portions are represented by X in Fig. 14).

The ends of the plurality of first rod-shaped members Bₙ' are held between the first end plate S₁ and the intermediate support member N' for connection. The ends of the plurality of second rod-shaped members Bₙ" are held between the second end plate S₂ and the intermediate support member N' for connection. A mesh of the screen S is formed by adjacent first rod-shaped members Bₙ' and adjacent second rod-shaped members Bₙ".

As in the foregoing embodiment, the first end plate S₁ may be formed integrally. The first end plate S₁ may also comprise a first ring-shaped end plate ring S₁' and first ring-shaped end plate contact member S₁". A plurality of ring-shaped engaging sections 12 engaging with the first rod-shaped members Bₙ' having substantially a uniform cross-sectional shape are formed by cutting by means of a press, a laser beam or a wire cutter on the first end plate contact member S₁" in contact with the first end plate ring S₁'. Similarly, on the first intermediate support member N₁' for connection in contact with the intermediate support member N' for connection, a plurality of ring-shaped engaging sections N₁'2 engaging with the first rod-shaped members Bₙ' having substantially a uniform cross-sectional shape are formed by cutting by means of a press, a laser beam or a wire cutter.

As in the foregoing embodiment, the second end plate S₂ may be formed integrally. The second end plate S₂ may also comprise a second ring-shaped end plate ring S₂' and second ring-shaped end plate contact member S₁". A plurality of ring-shaped engaging sections 22 engaging with the second rod-shaped members Bₙ" having substantially a uniform cross-sectional shape are formed by cutting by means of a press, a laser or a wire cutter on the second end plate contact member S₂" in contact with the second end plate ring S₂" in contact with the second end plate ring S₂'. Similarly, on the second intermediate support member N₁" for connection in contact with the intermediate support member N' for connection, a plurality of ring-shaped engaging sections N₁"2 engaging with the second rod-shaped members Bₙ" having substantially a uniform cross-sectional shape are formed by cutting by means of a press, a laser beam, or a wire cutter.

More specifically, an end of the first rod-shaped member Bₙ' is in contact with the engaging section 12 formed by the first end plate ring S₁' and the first end plate contact member S₁", and other end of the first rod-shaped member Bₙ' is in contact with, and is supported by, the engaging section N₁'2 formed by the intermediate support member N for connection and the first intermediate contact member N₁' for connection. An end of the second rod-shaped member Bₙ" is in contact with the engaging section 22 formed by the second end plate ring S₂' and the second end plate contact member S₂", and the other end of the second rod-shaped member Bₙ' is in contact with, and is supported by, the engaging section N₁"2 formed by the intermediate support member N' for connection and the second intermediate contact member N₁".

While, in Fig. 14, eight intermediate support members N₁, N₂, N₃, N₄, N₅, N₆, N₇ and N₈ are provided between the first end plate S₁, and the second end plate S₂, the intermediate support member Nₙ is not always necessary. When intermediate support members Nₙ are provided, the interval between the opposed first end plate S₁ and intermediate support member N₁ closest to the first end plate S₁, is kept, for example, by positioning a first span holding member group SP₁, comprising a cylindrical collar used for keeping a distance between two members, on the outer periphery of each of the interval keeping members Hₙ, providing the same between the first end plate S₁, and the intermediate support member N₁, closest to the first end plate S₁, and bringing the same into contact with the opposed first end plate S₁, and intermediate support member N₁ closes to the first end plate S₁.

Similarly, the interval between the opposed second end plate S₂ and intermediate support member N₈ closest to the second end plate S₂ is kept, for example, by positioning a second span holding member group SP₁₀, comprising a cylindrical collar used for keeping a distance between two members, on the outer periphery of each of the interval keeping members Hₙ, providing the same between the second end plate S₂ and the intermediate support member N₈ closest to the second end plate S₂, and bringing the same into contact with the opposed second end plate S₂ and intermediate support member N₈ closest to the second end plate S₂.

Also similarly, the interval between the opposed members (N₁ and N₂), (N₂ and N₃), (N₃ and N₄), (N₄ and N₁'), (N₁" and N₅), (N₅ and N₆), (N₆ and N₇) and (N₇ and N₈) is kept, for example, by positioning span holding member groups SP₂ to SP₉, each comprising a cylindrical collar used for keeping a distance between two members, on the outer periphery of each of the opposed members (N₁ and N₂), (N₂ and N₃), (N₃ and N₄), (N₄ and N₁'), (N₁" and N₅), (N₅ and N₆), (N₆ and N₇) and (N₇ and N₈), and bringing the same into contact with the opposed members (N₁ and N₂), (N₂ and N₃), (N₃ and N₄), (N₄ and N₁'), (N"₁ and N₅), (N₅ and N₆), (N₆ and N₇) and (N₇ and N₈).

In order to cause the interval keeping members Hₙ to pass through, an opening 11 for interval keeping member is provided in the first end plate S₁; openings for interval keeping members N₁1, N₂1, N₃1, N₄1, N₅1, N₆1, N₇1 and N₈1 are provided in the intermediate support member N; an opening for interval keeping member N₁'₁1 is provided in the first intermediate contact member N₁' for connection; an opening for interval keeping member N'₁1 is provided in the intermediate support member N' for connection; openings for interval keeping members N₁'₁1 and N₁"₁1 are provided in the second intermediate contact members N₁' and N₁" for connection; and an opening 21 for interval keeping member is provided in the second end plate S₂.

According to the paper-making screen apparatus of claim 1, the second end plate and all the interval keeping members on one side of the screen are secured by tightening the second end plate against the plurality of interval keeping members through engagement of the male screws with the female screws via the openings for male screws provided in the second end plate, fixture of at least the side of the interval keeping members facing the second end plate being thus secured without relying upon welding. As a result, the second members are free from the effect of welding strain, and it is possible to keep uniform intervals between adjacent rod-shaped members as compared with conventional ones. Furthermore, in a state in which the first end plate and the second end plate holding the plurality of rod-shaped members in between are pressed by a press or the like, it is not necessary to weld the second end plate with the interval keeping members. Assembly is very easy, and when replacing a damaged rod-shaped member after assembly, detaching is very easy since the members are not welded as in the conventional art.

According to the paper-making screen apparatus of claim 2 or 3, it is possible to support the rod-shaped members by the intermediate support member and to reinforce the rod-shaped members even with long rod-shaped members, in addition to the advantages of the invention as derived from claim 1 described above.

According to the paper-making screen apparatus of claim 4, when long rod-shaped members are formed by drawing, and it is consequently impossible to achieve a uniform cross-sectional shape or to keep uniform intervals between adjacent rod-shaped members, or when the rod-shaped members are too long to keep a strength, it is possible to cope with it by dividing the rod-shaped members into first rod-shaped members and second rod-shaped members and providing an intermediate support member between the first end plate and the second end plate, in addition to the advantages of the invention as derived from claim 1 described above.

According to the paper-making screen apparatus of claim 5, the first end plate is composed of the first end plate ring and the first end plate contact member, and the second end plate is composed of the second end plate ring and the second end plate contact member. Even with the engaging section for rod-shaped members having a complicated shape, therefore, it is possible to easily form the engaging sections of the first end plate contact member and the second end plate contact member by cutting by means of a press, a laser beam or a wire cutter, in addition to the advantages of the invention as derived from claims 1 to 3 described above.

According to the paper-making screen apparatus of claim 6, the first end plate is composed of the first end plate ring and the first end plate contact member, and the second end plate is composed of the second end plate ring and the second end plate contact member, and further, the first end plate contact member, the second end plate contact member, and the intermediate support member comprise identical parts. Even with the engaging sections for rod-shaped members having a complicated shape, therefore, it is possible to easily form the engaging sections for rod-shaped members of the first end plate contact member, the second end plate contact member, and the intermediate support member by cutting by means of a press, a laser beam or a wire cutter, in addition to the advantages of the invention as derived from claims 2 to 3 described above.

## Claims

1. A paper-making screen apparatus for separating foreign matters from paper-making raw materials via a screen, comprising:
a screen (S) having:
- a first annular end plate (S₁) located at an end thereof;
- a second annular end plate (S₂) located at the other end thereof;
- a plurality of interval keeping members (Hₙ) each secured to said first end plate (S₁) and said second end plate (S₂) keeping an interval from said first end plate (S₁) and said second end plate (S₂);
- a plurality of rod-shaped members (Bₙ) each having an end in contact with said first end plate (S₁) and the other end in contact with said second end plate (S₂), and annularly arranged in parallel with each other at certain intervals;
said first end plate (S₁) and said second end plate (S₂) holding the ends of said plurality of rod-shaped members in between; **characterized in that**:
said second annular end plate (S₂) has a plurality of openings for male screws;
said plurality of interval keeping members (Hₙ) have female screws (Mₙ) on the side facing said second end plate (S₂);
said screen (S) further has a plurality of male screws (Vₙ) engaging with said female screws (Mₙ);
said plurality of male screws (Vₙ) engages with said female screws; and **in that** said second end plate (S₂) is secured to said interval keeping members (Hₙ) by engaging said male screws (Vₙ) via openings (Kₙ) for the male screws (Vₙ) provided in said second end plate (S₂) with said female screws (Mₙ) and tightening said second end plate (S₂) against said plurality of interval keeping members (Hₙ).

2. A paper-making screen apparatus according to claim 1, wherein said screen has:
an annular intermediate support member (N), provided between said second end plate (S₂) and said first end plate (S₁), and having openings (N₁1) for a plurality of interval keeping members (Hₙ) and engaging sections for the plurality of rod-shaped members (Bₙ) provided annularly;
a plurality of interval keeping members (Hₙ) passing through the openings (N₁1) for the interval keeping members (Hₙ) of said intermediate support member (N), secured to said first end plate (S₁) and said second end plate (S₂), thereby keeping an interval between said first end plate (S₁) and said second end plate (S₂), and each having female screws (Mₙ) on the side thereof facing said second end plate (S₂);
a first span holding member group (SP₁), located on the outer periphery of each of said interval keeping members (Hₙ), provided between said first end plate (S₁) and said intermediate support member (N), and each being in contact with said first end plate (S₁) and said intermediate support member (N) facing thereto, thereby keeping an interval between said first end plate (S₁) and said intermediate support member (N) facing thereto; and
a second span holding member group (SP₇), located on the outer periphery of each of said interval keeping members (Hₙ), provided between said second end plate (S₂) and said intermediate support member (N), and each being in contact with said second end plate (S₂) and said intermediate support member (N) facing thereto, thereby keeping an interval between said second end plate (S₂) and said intermediate support member (N) facing thereto;
said rod-shaped members (Bₙ) engaging with the engaging sections (Nₙ2) for rod-shaped members (Bₙ) being free from regulation in the longitudinal direction of said rod-shaped members (Bₙ), and regulated for movement in a direction at right angles to the longitudinal direction of the rod-shaped members (Bₙ).

3. A paper-making screen apparatus according to claim 1, wherein said screen has:
at least two annular intermediate support members (Nₙ), provided between said second end plate (S₂) and said first end plate (S₁), and having openings (Nₙ1) for a plurality of interval keeping members (Hₙ) and engaging sections (Nₙ2) for the plurality of rod-shaped members (Bₙ) provided annularly;
a plurality of interval keeping members (Hₙ) passing through the openings (Nₙ1) for the interval keeping members (Hₙ) of said intermediate support member (Nₙ), secured to said first end plate (S₁) and said second end plate (S₂), thereby keeping an interval between said first end plate (S₁) and said second end plate (S₂), and each having female screws (Mₙ) on the side thereof facing said second end plate (S₂);
at least one span holding member group (SPₙ), located on the outer periphery of each of said plurality of interval keeping members (Hₙ), provided between said opposed intermediate support members (Nₙ), and keeping intervals between said opposed intermediate support members (Nₙ) by coming into contact with said opposed intermediate support members (Nₙ);
a first span holding member group (SP₁), located on the outer periphery of each of said interval keeping members (Hₙ), provided between said first end plate (S₁) and said intermediate support member (Nₙ) closest to said first end plate (S₁), and coming into contact with said opposed first end plate (S₁) and said intermediate support member (N₁) closest to said first end plate (S₁), thereby holding the interval between said opposed first end plate (S₁) and said intermediate support member (N₁) closest to said first end plate (S₁); and
a second span holding member group (SP₇), located on the outer periphery of each of said interval keeping members (Hₙ), provided between said second end plate (S₁) and said intermediate support member (N₆) closest to said second end plate (S₂), and coming into contact with said opposed second end plate (S₂) and said intermediate support member (N₆) closest to said second end plate (S₂), thereby holding the interval between said opposed second end plate (S₂) and said intermediate support member (N₆) closest to said second end plate;
said rod-shaped members (Bₙ) engaging with the engaging sections (Nₙ2) for rod-shaped members being free from regulation in the longitudinal direction of said rod-shaped members (Bₙ), and regulated for movement in a direction at right angles to the longitudinal direction of the rod-shaped members (Bₙ).

4. A paper-making screen apparatus for separating foreign matters from paper-making raw materials via a screen, comprising:
a screen (S) having:
a first annular end plate (S₁) located at an end thereof;
a second annular end plate (S₂) located at the other end thereof;
an intermediate support member for connection (N')₁ provided between said second end plate (S₂) and said first end plate (S₁), and having openings for interval keeping members (Hₙ);
a plurality of interval keeping members (Hₙ), passing through said openings for interval keeping members (Hₙ), secured to said first end plate (S₁) and said second end plate (S₂), keeping an interval between said first end plate (S₁) and said second end plate (S₂), and each having female screws on the side thereof facing said second end plate (S₂);
a plurality of first rod-shaped members (B'ₙ) annularly arranged in parallel with each other at certain intervals between said first end plate (S₁) and said intermediate support member (N') for connection; and
a plurality of second rod-shaped members (Bₙ") annularly arranged in parallel with each other at certain intervals between said second end plate (S₂) and said intermediate support member (N') for connection;
ends of said plurality of rod-shaped members (Bₙ') being held between said first end plate (S₁) and said intermediate support member (N') for connection, and ends of said plurality of second rod-shaped members (Bₙ") being held between said second end plate (S₂) and said intermediate support member (N') for connection,
**characterized in that**:
said second annular end plate ((S₂) S₂) has a plurality of openings for male screws;
said plurality of interval keeping members (Hₙ) have female screws (Mₙ) on the side thereof facing said second end plate (S₂);
said screen (S) further has a plurality of male screws (Vₙ) engaging with said female screws (Mₙ);
said second end plate (S₂) being secured to said interval keeping members (Hₙ) by engaging said male screws (Vₙ) via openings (Kₙ) for the male screws (Vₙ) provided in said second end plate (S₂) with said female screws (Mₙ) and tightening said second end plate (S₂) against said plurality of interval keeping members (Hₙ).

5. A paper-making screen apparatus according to any one of claims 1 to 3, wherein:
said first end plate (S₁) comprises a first end plate ring (S₁') and a first end plate contact member (S₁");
said first end plate contact member (S₁") is in contact with said first end plate ring (S₁'), and has a plurality of openings for interval keeping members (Hₙ) and a plurality of engaging sections for rod-shaped members (Bₙ') provided annularly;
said second end plate (S₂) comprises a second end plate ring (S₂') and a second end plate contact member (S₂");
said second end plate contact member (S₂") is in contact with said second end plate ring (S₂"), and has a plurality of openings for interval keeping members and a plurality of engaging sections for rod-shaped members (Bₙ") provided annularly; and
said plurality of openings for interval keeping members (Hₙ) and said plurality of engaging sections for rod-shaped members (Bₙ') provided annularly of said first end plate contact member (S₁") and said second end plate contact member (S₂") are formed by cutting with a press, a laser beam or a wire cutter.

6. A paper-making screen apparatus according to any one of claims 2 and 3, wherein:
said first end plate (S₁) comprises a first end plate ring (S₁') and a first end plate contact member (S₁");
said first end plate contact member (S₁") is in contact with said first end plate ring (S₁') and has a plurality of openings for interval keeping members (Hₙ) and a plurality of engaging sections for rod-shaped members (Bₙ') provided annularly;
said second end plate (S₂) comprises a second end plate ring (S₂') and a second end plate contact member (S₂");
said second end plate contact member (S₂") is in contact with said second end plate ring (S₂'), and has a plurality of openings for interval keeping members (Hₙ) and a plurality of engaging sections for rod-shaped members (Bₙ") provided annularly; and
said intermediate support member (N), said plurality of openings for interval keeping members (Hₙ) and said plurality of engaging sections for rod-shaped members (Bₙ') provided annularly of said first end plate contact member (S₂") and said second end plate contact member (S₂") are formed by cutting with a press, a laser beam or a wire cutter, and said first end plate contact member (S₁"), said second end plate contact member (S₂") and said intermediate support member (N) are the same part.

## Patentansprüche

1. Siebvorrichtung für die Papierherstellung zur Abtrennung von Fremdmaterialien aus Papierherstellungs-Rohmaterialien über ein Sieb:
ein Sieb (S) mit:
- einer ersten ringförmigen Endplatte (S₁), die an einem seiner Enden angeordnet ist;
- einer zweiten ringförmigen Endplatte (S₂), die an seinem anderen Ende angeordnet ist;
- mehreren Abstandhalterbauteilen (Hₙ), von denen jedes an der ersten Endplatte (S₁) und der zweiten Endplatte (S₂) gesichert ist und die einen Abstand von der ersten Endplatte (S₁) zur zweiten Endplatte (S₂) halten;
- mehreren stabförmigen Bauteilen (Bₙ), von denen jedes mit einem Ende in Kontakt mit der ersten Endplatte (S₁) und mit dem anderen Ende in Kontakt mit der zweiten Endplatte (S₂) steht, und welche ringförmig parallel zu einander in bestimmten Abständen angeordnet sind;
wobei die erste Endplatte (S₁) und die zweite Endplatte (S₂) die Enden der Vielzahl der stabförmigen Bauteile zwischen sich halten; **dadurch gekennzeichnet, dass**:
die zweite ringförmige Endplatte (S₂) mehrere Öffnungen für Außengewindeschrauben hat;
die Vielzahl der Abstandhalterbauteil (Hₙ) Innengewinde (Mₙ) an der Seite hat, welche der zweiten Endplatte (S₂) zugewandt ist;
das Sieb (S) ferner mehrere Außengewindeschrauben (Vₙ) aufweist, die mit den Innengewinden (Mₙ) in Eingriff kommen;
die Vielzahl der Außengewindeschrauben (Vₙ) mit den Innengewinden in Eingriff steht; und dadurch, dass
die zweite Endplatte (S₂) dadurch an den Abstandhalterbauteil (Hₙ) gesichert ist, dass die Außengewindeschrauben (Vₙ) über Öffnungen (Kₙ) für die Außengewindeschrauben (Vₙ), die in der zweiten Endplatte (S₂) vorgesehen sind, mit den Innengewinden (Mₙ) in Eingriff kommen, und durch das Festziehen der zweiten Endplatte (S₂) gegen die Vielzahl der Abstandhalterbauteile (Hₙ).

2. Siebvorrichtung für die Papierherstellung nach Anspruch 1, bei welcher das Sieb aufweist:
ein ringförmiges Zwischenträgerbauteil (N), das zwischen der zweiten Endplatte (S₂) und der ersten Endplatte (S₁) vorgesehen ist und Öffnungen (N₁) für eine Vielzahl von Abstandhalterbauteilen (Hₙ) aufweist, sowie Eingriffsabschnitte für die Vielzahl der stabförmigen Bauteile (Bₙ), die ringförmig vorgesehen sind;
eine Vielzahl von Abstandhalterbauteilen (Hₙ), die durch die Öffnungen (N₁) für die Abstandhalterbauteile (Hₙ) des Zwischenträgerbauteils (N) hindurchgehen und an der ersten Endplatte (S₁) und der zweiten Endplatte (S₂) gesichert sind, wodurch ein Abstand zwischen der ersten Endplatte (S₁) und der zweiten Endplatte (S₂) gehalten wird, wobei sie ihre Innengewinde (Mₙ) an ihrer Seite aufweisen, welche der zweiten Endplatte (S₂) zugewandt ist;
eine erste Gruppe (SP₁) überspannender Haltebauteile, die am äußeren Umfang jedes der Abstandhalterbauteile (Hₙ) angeordnet und zwischen der ersten Endplatte (S₁) und dem Zwischenträgerbauteil (N) vorgesehen ist, wobei jedes in Kontakt mit der ersten Endplatte (S₁) und dem dieser zugewandten Zwischenträgerbauteil (N) ist, wodurch ein Abstand zwischen der ersten Endplatte (S₁) und dem Zwischenträgerbauteil (N) gehalten wird, das dieser zugewandt ist; und
einer zweiten Gruppe (SP₇) überspannender Haltebauteile, die am äußeren Umfang jedes der Abstandhalterbauteile (Hₙ) angeordnet und zwischen der zweiten Endplatte (S₂) und dem Zwischenträgerbauteil (N) vorgesehen ist, wobei jedes in Kontakt mit der zweiten Endplatte (S₂) und dem dieser zugewandten Zwischenträgerbauteil (N) ist, wodurch ein Abstand zwischen der zweiten Endplatte (S₂) und dem Zwischenträgerbauteil (N) gehalten wird, dass dieser zugewandt ist;
wobei die stabförmigen Bauteile (Bₙ) mit den Eingriffsabschnitten (Nₙ2) für die stabförmigen Bauteile (Bₙ) in Eingriff sind, welche in der Längsrichtung der stabförmigen Bauteile (Bₙ) freigestellt sind und zur Bewegung in einer Richtung im rechten Winkel zu der Längsrichtung der stabförmigen Bauteile (Bₙ) eingestellt sind.

3. Siebvorrichtung für die Papierherstellung nach Anspruch 1, bei der das Sieb aufweist:
mindestens zwei ringförmige Zwischenträgerbauteile (Nₙ) die zwischen der zweiten Endplatte (S₂) und der ersten Endplatte (S₁) vorgesehen sind und Öffnungen (Nₙ1) für eine Vielzahl von Abstandhalterbauteilen (Hₙ) und Eingriffsabschnitte (Nₙ2) für die Vielzahl der stabförmigen Bauteile (Bₙ) haben, die ringförmig vorgesehen sind;
eine Vielzahl von Abstandhalterbauteilen (Hₙ), die durch die Öffnungen (Nₙ1) für die Abstandhalterbauteile (Hₙ) des Zwischenträgerbauteils (Nₙ) hindurchgehen, gesichert an der ersten Endplatte (S₁) und der zweiten Endplatte (S₂), wodurch ein Abstand zwischen der ersten Endplatte (S₁) und der zweiten Endplatte (S₂) gehalten wird, und die jeweils Innengewinde (Mₙ) auf ihrer Seite aufweisen, die der zweiten Endplatte (S₂) zugewandt ist;
mindestens eine Gruppe (SPₙ) überspannende Haltebauteile, die an dem äußeren Umfang eines jeden aus der Vielzahl der Abstandhalterbeuteile (Hₙ) angeordnet und zwischen den gegenüberliegenden Zwischenträgerbauteilen (Mₙ) vorgesehen sind, und die Abstände zwischen den gegenüberliegenden Zwischenträgerbauteilen (Mₙ) halten, indem sie in Kontakt mit dem gegenüberliegenden Zwischenträgerbauteilen (Mₙ) kommen;
einer ersten Gruppe (SP₁) überspannender Haltebauteile, die an dem äußeren Umfang eines jeden der Abstandhalterbauteile (Hₙ) vorgesehen und zwischen der ersten Endplatte (S₁) und dem Zwischenträgerbauteil (Mₙ) vorgesehen sind, das der ersten Endplatte (S₁) am nächsten liegt und welche mit der gegenüberliegenden ersten Endplatte (S₁) und dem Zwischenträgerbauteil N₁ in Kontakt kommen, das der ersten Endplatte (S₁) am nächsten liegt, wodurch der Abstand zwischen der gegenüberliegenden ersten Endplatte (S₁) und dem Zwischenträgerbauteil N₁, das der ersten Endplatte (S₁) am nächsten liegt, gehalten wird; und
einer zweiten Gruppe (SP₇) überspannender Haltebauteile, die an dem äußeren Umfang eines jeden der Abstandhalterbauteile (Hₙ) angeordnet und zwischen der zweiten Endplatte (S₂) und dem Zwischenträgerbauteil (N₆) vorgesehen sind, das der zweiten Endplatte (S₂) am nächsten liegt, und welche mit der gegenüberliegenden zweiten Endplatte (S₂) und dem Zwischenträgerbauteil (N₆) in Kontakt kommen, dass der zweiten Endplatte (S₂) am nächsten liegt, wodurch der Abstand zwischen der gegenüberliegenden zweiten Endplatte (S₂) und dem Zwischenträgerbauteil (N₆), das der zweiten Endplatte am nächsten kommt, gehalten wird;
wobei die stabförmigen Bauteile (Bₙ) mit den Eingriffsabschnitten (Nₙ2) für die stabförmigen Bauteile in Eingriff kommen, die in der Längsrichtung der stabförmigen Bauteile (Bₙ) freigestellt sind, und zur Bewegung in einer Richtung im rechten Winkel zur Längsrichtung der stabförmigen Bauteile (Bₙ) eingestellt sind.

4. Siebvorrichtung für die Papierherstellung zur Abtrennung von Fremdmaterialien aus Papierherstellungs-Rohmaterialien über ein Sieb, mit:
einem Sieb (S) mit:
einer ersten ringförmigen Endplatte (S₁), die an einem seiner Enden angeordnet ist;
einer zweiten ringförmigen Endplatte (S₂), die an seinem anderen Ende angeordnet ist;
einem Verbindungs-Zwischenträgerbauteil (N') das zwischen der zweiten Endplatte (S₂) und der ersten Endplatte (S₁) vorgesehen ist und Öffnungen für Abstandhalterbauteile (Hₙ) aufweist;
einer Vielzahl von Abstandhalterbauteilen (Hₙ), die durch die Öffnungen für die Abstandhalterbauteile (Hₙ) hindurchgehen, gesichert an der ersten Endplatte (S₁) und der zweiten Endplatte (S₂), wobei sie einen Abstand zwischen der ersten Endplatte (S₁) und der zweiten Endplatte (S₂) halten und jeweils Innengewinde an ihrer Seite aufweisen, die der zweiten Endplatte (S₂) zugewandt ist;
einer Vielzahl erster stabförmiger Bauteile (Bₙ'), die ringförmig parallel zueinander in bestimmten Abständen zwischen der ersten Endplatte (S₁) und dem Verbindungszwischenträgerbauteil (N') angeordnet sind; und
eine Vielzahl zweiter stabförmiger Bauteile (Bₙ"), die ringförmig parallel zu einander bei bestimmten Abständen zwischen der zweiten Endplatte und dem Verbindungszwischenträgerbauteil (N') angeordnet sind;
wobei die Enden der Vielzahl der stabförmigen Bauteile (Bₙ') zwischen der ersten Endplatte (S₁) und dem Verbindungs-Zwischenträgerbauteil (N') gehalten werden, und
wobei die Enden der Vielzahl der zweiten stabförmigen Bauteile (Bₙ") zwischen der zweiten Endplatte (S₁) und den Verbindungs-Zwischenträgerbauteilen (N') gehalten werden,
**dadurch gekennzeichnet, dass**:
die zweite ringförmige Endplatte (S₂) eine Vielzahl von Öffnungen für Außengewindeschrauben aufweist;
die Vielzahl der Abstandhalterbauteile (Hₙ) Innengewindeschrauben (Mₙ) an der Seite aufweisen, welche der zweiten Endplatte (S₂) zugewandt ist;
das Sieb (S) ferner eine Vielzahl von Außengewindeschrauben (Vₙ) aufweist, die mit den Innengewinden (Mₙ) im Eingriff sind;
die zweite Endplatte (S₂) dadurch an den Abstandhalterbauteilen (Hₙ) gesichert ist, dass die Außengewindeschrauben (Vₙ) über Öffnungen (Kₙ) für die Außengewindeschrauben (Vₙ), die in der zweiten Endplatte (S₂) vorgesehen sind, die Innengewinde (Mₙ) in Eingriff nehmen, und dadurch, dass die zweite Endplatte (S₂) gegen die Vielzahl der Abstandhalterbauteile (Hₙ) angezogen wird.

5. Siebvorrichtung für die Papierherstellung gemäß einem der Ansprüche 1 bis 3, bei der:
die erste Endplatte (S₁) einen ersten Endplattenring (S₁') und ein erstes Endplatten-Kontaktbauteil (S₁") aufweist;
das erste Endplattenkontaktbauteil (S₁") in Kontakt mit dem ersten Endplattenring (S₁') steht und eine Vielzahl von Öffnungen für Abstandhalterbauteile (Hₙ) und eine Vielzahl von Eingriffsabschnitten für stabförmige Bauteile (Bₙ') aufweist, die ringförmig vorgesehen sind;
die zweite Endplatte (S₂) einen zweiten Endplattenring (S₂) und ein zweites Endplattenkontaktbauteil (S₂") aufweist;
das zweite Endplattenkontaktbauteil (S₂") in Kontakt mit dem zweiten Endplattenring S₂' steht und eine Vielzahl von Öffnungen für Abstandhalterbauteile und eine Vielzahl von Eingriffsabschnitten für stabförmige Bauteile (Bₙ") aufweist, die ringförmig vorgesehen sind; und
die Vielzahl der Öffnungen für die Abstandhalterbauteile (Hₙ) und die Vielzahl der Eingriffsabschnitte für die ringförmig vorgesehenen stabförmigen Bauteile (Bₙ') des ersten Endplattenkontaktbauteils (S₁") und des zweiten Endplattenkontaktbauteils (S₂") durch das Schneiden mit einer Presse, einem Laserstrahl oder einem Drahtschneider ausgebildet werden.

6. Siebvorrichtung für die Papierherstellung gemäß einem der Ansprüche 2 und 3, bei der:
die erste Endplatte (S₁) einen ersten Endplattenring (S₁') und ein erstes Endplattenkontaktbauteil (S₁") aufweist;
das erste Endplattenkontaktbauteil (S₁") im Kontakt mit dem ersten Endplattenring (S₁') steht und eine Vielzahl von Öffnungen für Abstandhalterbauteile Hₙ und eine Vielzahl von Eingriffsabschnitten für stabförmige Bauteile (Bₙ') aufweist, die ringförmig vorgesehen sind;
die zweite Endplatte (S₂) einen zweiten Endplattenring (S₂') und ein zweites Endplattenkontaktbauteil (S₂") aufweist;
das zweite Endplattenkontaktbauteil (S₂') mit dem zweiten Endplattenring (S₂') in Kontakt ist und eine Vielzahl von Öffnungen für Abstandhalterbauteile (Hₙ) und eine Vielzahl von Eingriffsabschnitten für ringförmig angeordnete stabförmige Bauteile (Bₙ") aufweist; und
das Zwischenträgerbauteil (N), die Vielzahl der Öffnungen für die Abstandhalterbauteile (Hₙ) und die Vielzahl der Eingriffsabschnitte für die ringförmig angeordneten stabförmigen Bauteile (Bₙ') des ersten Endplattenkontaktbauteils (S₁") und des zweiten Endplattenkontaktbauteils (S₂") durch das Schneiden mit einer Presse, mit einem Laserstrahl oder einem Drahtschneider ausgebildet werden, und das erste Endplattenkontaktbauteil (S₁"), das zweite Endplattenkontaktbauteile (S₂") und das Zwischenträgerbauteil (N) das selbe Teil sind.

## Revendications

1. Dispositif de tamis pour la fabrication du papier, pour séparer des matières étrangères de matières premières de fabrication de papier à l'aide d'un tamis, comprenant :
un tamis (S) comportant :
- une première plaque d'extrémité annulaire (S₁) disposée à une extrémité de celui-ci ;
- une deuxième plaque d'extrémité annulaire (S₂) disposée à l'autre extrémité de celui-ci ;
- une pluralité d'éléments de maintien d'intervalle (Hₙ) fixés chacun à ladite première plaque d'extrémité (S₁) et à ladite deuxième plaque d'extrémité (S₂), de façon à maintenir un intervalle entre ladite première plaque d'extrémité (S₁) et ladite deuxième plaque d'extrémité (S₂) ;
- une pluralité d'éléments en forme de tige (Bₙ) comportant chacun une extrémité en contact avec ladite première plaque d'extrémité (S₁), et l'autre extrémité en contact avec ladite deuxième plaque d'extrémité (S₂), et disposés de façon annulaire parallèlement les uns aux autres à certains intervalles ;
ladite première plaque d'extrémité (S₁) et ladite deuxième plaque d'extrémité (S₂) supportant les extrémités de ladite pluralité d'éléments en forme de tige entre elles ; **caractérisé en ce que** :
ladite deuxième plaque d'extrémité annulaire (S₂) comporte une pluralité d'ouvertures pour des vis mâles ;
ladite pluralité d'éléments de maintien d'intervalle (Hₙ) comportent des vis femelles (Mₙ) sur le côté regardant vers ladite deuxième plaque d'extrémité (S₂) ;
ledit tamis (S) comporte de plus une pluralité de vis mâles (Vₙ) coopérant avec lesdites vis femelles (Mₙ) ;
ladite pluralité de vis mâles (Vₙ) coopérent avec lesdites vis femelles ; et **en ce que** ladite deuxième plaque d'extrémité (S₂) est fixée auxdits éléments de maintien d'intervalle (Hₙ) par coopération desdites vis mâles (Vₙ) par l'intermédiaire d'ouvertures (Kₙ) pour les vis mâles (Vₙ) disposées dans ladite deuxième plaque d'extrémité (S₂) avec lesdites vis femelles (Mₙ) et serrage de ladite deuxième plaque d'extrémité (S₂) contre ladite pluralité d'éléments de maintien d'intervalle (Hₙ).

2. Dispositif de tamis pour la fabrication du papier selon la revendication 1, dans lequel ledit tamis comporte :
un élément de support intermédiaire (N), disposé entre ladite deuxième plaque d'extrémité (S₂) et ladite première plaque d'extrémité (S₁), et comportant des ouvertures (N₁1) pour une pluralité d'éléments de maintien d'intervalle (Hₙ) et des sections d'engagement pour la pluralité d'éléments en forme de tige (Bₙ) disposés de façon annulaire ;
une pluralité d'éléments de maintien d'intervalle (Hₙ) traversant les ouvertures (N₁1) pour les éléments de maintien d'intervalle (Hₙ) dudit élément de support intermédiaire (N), fixés à ladite première plaque d'extrémité (S₁) et à ladite deuxième plaque d'extrémité (S₂), de façon à maintenir ainsi un intervalle entre ladite première plaque d'extrémité (S₁) et ladite deuxième plaque d'extrémité (S₂), et comportant chacun des vis femelles (Mₙ) sur le côté de ceux-ci regardant vers ladite deuxième plaque d'extrémité (S₂) ;
un premier groupe d'éléments de maintien de portée (SP₁), disposés sur la périphérie extérieure de chacun desdits éléments de maintien d'intervalle (Hₙ), disposés entre ladite première plaque d'extrémité (S₁) et ledit élément de support intermédiaire (N), chacun d'entre eux étant en contact avec ladite première plaque d'extrémité (S₁) et ledit élément de support intermédiaire (N) regardant vers celle-ci, de façon à maintenir ainsi un intervalle entre ladite première plaque d'extrémité (S₁) et ledit élément de support intermédiaire (N) regardant vers celle-ci ; et
un deuxième groupe d'éléments de maintien de portée (SP₇), disposés sur la périphérie extérieure de chacun desdits éléments de maintien d'intervalle (Hₙ), disposés entre ladite deuxième plaque d'extrémité (S₂) et ledit élément de support intermédiaire (N), chacun d'entre eux étant en contact avec ladite deuxième plaque d'extrémité (S₂) et ledit élément de support intermédiaire (N) regardant vers celle-ci, de façon à maintenir ainsi un intervalle entre ladite deuxième plaque d'extrémité (S₂) et ledit élément de support intermédiaire (N) regardant vers celle-ci ;
lesdits éléments en forme de tige (Bₙ) coopérant avec les sections d'engagement (Nₙ2) pour que les éléments en forme de tige (Bₙ) soient libres de toute régulation dans la direction longitudinale desdits éléments en forme de tige (Bₙ), et régulés pour le déplacement dans une direction à angle droit de la direction longitudinale des éléments en forme de tige (Bₙ).

3. Dispositif de tamis pour la fabrication du papier selon la revendication 1, dans lequel ledit tamis comporte :
au moins deux éléments de support intermédiaires annulaires (Nₙ), disposés entre ladite deuxième plaque d'extrémité (S₂) et ladite première plaque d'extrémité (S₁), et comportant des ouvertures (Nₙ1) pour une pluralité d'éléments de maintien d'intervalle (Hₙ) et des sections d'engagement (Nₙ2) pour la pluralité d'éléments en forme de tige (Bₙ) disposés de façon annulaire ;
une pluralité d'éléments de maintien d'intervalle (Hₙ) traversant les ouvertures (Nₙ1) pour les éléments de maintien d'intervalle (Hₙ) dudit élément de support intermédiaire (Nₙ), fixés à ladite première plaque d'extrémité (S₁) et à ladite deuxième plaque d'extrémité (S₂), de façon à maintenir ainsi un intervalle entre ladite première plaque d'extrémité (S₁) et ladite deuxième plaque d'extrémité (S₂), et comportant chacun des vis femelles (Mₙ) sur le côté de ceux-ci regardant vers ladite deuxième plaque d'extrémité (S₂) ;
au moins un groupe d'éléments de maintien de portée (SPₙ), disposés sur la périphérie extérieure de chacun de ladite pluralité d'éléments de maintien d'intervalle (Hₙ), disposés entre lesdits éléments de support intermédiaires opposés (Nₙ), et maintenant des intervalles entre lesdits éléments de support intermédiaires opposés (Nₙ) par venue en contact avec lesdits éléments de support intermédiaires opposés (Nₙ) ;
un premier groupe d'éléments de maintien de portée (SP₁), disposés sur la périphérie extérieure de chacun desdits éléments de maintien d'intervalle (Hₙ), disposés entre ladite première plaque d'extrémité (S₁) et ledit élément de support intermédiaire (Nₙ) le plus proche de ladite première plaque d'extrémité (S₁), et venant en contact avec ladite première plaque d'extrémité opposée (S₁) et ledit élément de support intermédiaire (N₁) le plus proche de ladite première plaque d'extrémité (S₁), de façon à maintenir ainsi l'intervalle entre ladite première plaque d'extrémité opposée (S₁) et ledit élément de support intermédiaire (N₁) le plus proche de ladite première plaque d'extrémité (S₁) ; et
un deuxième groupe d'éléments de maintien de portée (SP₇), disposés sur la périphérie extérieure de chacun desdits éléments de maintien d'intervalle (Hₙ), disposés entre ladite deuxième plaque d'extrémité (S₂) et ledit élément de support intermédiaire (N₆) le plus proche de ladite deuxième plaque d'extrémité (S₂), et venant en contact avec ladite deuxième plaque d'extrémité opposée (S₂) et ledit élément de support intermédiaire (N₆) le plus proche de ladite deuxième plaque d'extrémité (S₂), de façon à maintenir par conséquent l'intervalle entre ladite deuxième plaque d'extrémité opposée (S₂) et ledit élément de support intermédiaire (N₆) le plus proche de ladite deuxième plaque d'extrémité ;
lesdits éléments en forme de tige (Bₙ) coopérant avec les sections d'engagement (Nₙ2) pour que les éléments en forme de tige soient libres de toute régulation dans la direction longitudinale desdits éléments en forme de tige (Bₙ), et régulés pour le déplacement dans une direction à angle droit par rapport à la direction longitudinale des éléments en forme de tige (Bₙ).

4. Dispositif de tamis pour la fabrication du papier pour séparer des matières étrangères de matières premières de fabrication de papier à l'aide d'un tamis, comprenant :
un tamis (S) comportant :
- une première plaque d'extrémité annulaire (S₁) disposée à une extrémité de celui-ci ;
- une deuxième plaque d'extrémité annulaire (S₂) disposée à l'autre extrémité de celui-ci ;
un élément de support intermédiaire pour le raccordement (N'), disposé entre ladite deuxième plaque d'extrémité (S₂) et ladite première plaque d'extrémité (S₁), et comportant des ouvertures pour des éléments de maintien d'intervalle (Hₙ) ;
une pluralité d'éléments de maintien d'intervalle (Hₙ), traversant lesdites ouvertures pour les éléments de maintien d'intervalle (Hₙ), fixés à ladite première plaque d'extrémité (S₁) et à ladite deuxième plaque d'extrémité (S₂), de façon à maintenir un intervalle entre ladite première plaque d'extrémité (S₁) et ladite deuxième plaque d'extrémité (S₂), et comportant chacun des vis femelles sur le côté de ceux-ci regardant vers ladite deuxième plaque d'extrémité (S₂) ;
une pluralité de premiers éléments en forme de tige (Bₙ') disposés de façon annulaire parallèlement les uns aux autres à certains intervalles entre ladite première plaque d'extrémité (S₁) et ledit élément de support intermédiaire (N') pour le raccordement ; et
une pluralité de deuxièmes éléments en forme de tige (Bₙ") disposés de façon annulaire parallèlement les uns aux autres à certains intervalles entre ladite deuxième plaque d'extrémité (S₂) et ledit élément de support intermédiaire (N') pour le raccordement ;
des extrémités de ladite pluralité d'éléments en forme de tige (Bₙ') étant maintenues entre ladite première plaque d'extrémité (S₁) et ledit élément de support intermédiaire (N') pour le raccordement, et des extrémités de ladite pluralité de deuxièmes éléments en forme de tige (Bₙ") étant maintenues entre ladite deuxième plaque d'extrémité (S₂) et ledit élément de support intermédiaire (N') pour le raccordement,
**caractérisé en ce que** :
ladite deuxième plaque d'extrémité annulaire ((S₂) S₂) comporte une pluralité d'ouvertures pour des vis mâles ;
ladite pluralité d'éléments de maintien d'intervalle (Hₙ) comportent des vis femelles (Mₙ) sur le côté de ceux-ci regardant vers ladite deuxième plaque d'extrémité (S₂) ;
ledit tamis (S) comporte de plus une pluralité de vis mâles (Vₙ) coopérant avec lesdites vis femelles (Mₙ) ;
ladite deuxième plaque d'extrémité (S₂) étant fixée auxdits éléments de maintien d'intervalle (Hₙ) par coopération desdites vis mâles (Vₙ) par l'intermédiaire d'ouvertures (Kₙ) pour les vis mâles (Vₙ) disposées dans ladite deuxième plaque d'extrémité (S₂) avec lesdites vis femelles (Mₙ) et serrage de ladite deuxième plaque d'extrémité (S₂) contre ladite pluralité d'éléments de maintien d'intervalle (Hₙ).

5. Dispositif de tamis pour la fabrication du papier selon l'une quelconque des revendications 1 à 3, dans lequel :
ladite première plaque d'extrémité (S₁) comprend un premier anneau de plaque d'extrémité (S₁') et un premier élément de contact de plaque d'extrémité (S₁") ;
ledit premier élément de contact de plaque d'extrémité (S₁") est en contact avec ledit premier anneau de plaque d'extrémité (S₁'), et comporte une pluralité d'ouvertures pour des éléments de maintien d'intervalle (Hₙ) et une pluralité de sections d'engagement pour des éléments en forme de tige (Bₙ') disposés de façon annulaire ;
ladite deuxième plaque d'extrémité (S₂) comprend un deuxième anneau de plaque d'extrémité (S₂') et un deuxième élément de contact de plaque d'extrémité (S₂") ;
ledit deuxième élément de contact de plaque d'extrémité (S₂") est en contact avec ledit deuxième anneau de plaque d'extrémité (S₂"), et comporte une pluralité d'ouvertures pour des éléments de maintien d'intervalle et une pluralité de sections d'engagement pour des éléments en forme de tige (Bₙ") disposés de façon annulaire ; et
ladite pluralité d'ouvertures pour les éléments de maintien d'intervalle (Hₙ) et ladite pluralité de sections d'engagement pour des éléments en forme de tige. (Bₙ') disposées de façon annulaire dudit premier élément de contact de plaque d'extrémité (S₁") et dudit deuxième élément de contact de plaque d'extrémité (S₂") sont formées par découpage à l'aide d'une presse, d'un faisceau laser ou d'un dispositif de coupe à fil.

6. Dispositif de tamis pour la fabrication du papier selon l'une quelconque des revendications 2 et 3, dans lequel :
ladite première plaque d'extrémité (S₁) comprend un premier anneau de plaque d'extrémité (S₁') et un premier élément de contact de plaque d'extrémité (S₁") ;
ledit premier élément de contact de plaque d'extrémité (S₁") est en contact avec ledit premier anneau de plaque d'extrémité (S₁') et comporte une pluralité d'ouvertures pour des éléments de maintien d'intervalle (Hₙ) et une pluralité de sections d'engagement pour des éléments en forme de tige (Bₙ') disposés de façon annulaire ;
ladite deuxième plaque d'extrémité (S₂) comprend un deuxième anneau de plaque d'extrémité (S₂') et un deuxième élément de contact de plaque d'extrémité (S₂") ;
ledit deuxième élément de plaque de contact d'extrémité (S₂") est en contact avec ledit deuxième anneau de plaque d'extrémité (S₂'), et comporte une pluralité d'ouvertures pour des éléments de maintien d'intervalle (Hₙ) et une pluralité de sections d'engagement pour des éléments en forme de tige (Bₙ") disposés de façon annulaire ; et
ledit élément de support intermédiaire (N), ladite pluralité d'ouvertures pour des éléments de maintien d'intervalle (Hₙ) et ladite pluralité de sections d'engagement pour des éléments en forme de tige (Bₙ') disposés de façon annulaire dudit premier élément de contact de plaque d'extrémité (S₁") et dudit deuxième élément de plaque de contact d'extrémité (S₂") sont formées par découpage avec une presse, un faisceau laser ou un dispositif de coupe à fil, et ledit premier élément de contact de plaque d'extrémité (S₁"), ledit deuxième élément de plaque de contact d'extrémité (S₂") et ledit élément de support intermédiaire (N) constituent la même partie.
